# DEMANDE DE BREVET EUROPEEN

(11) **EP 0 645 199 A1**
(43) Date de publication de la demande: **29.03.1995**
(21) Numéro de dépôt: 94402165.8
(22) Date de dépôt: 28.09.1994
(51) Int. Cl.: B09C 1/02

(54) **Procédé de réhabilitation des sols pollués et installation pour la mise en ouevre de ce procédé**

(30) Priorité: 28.09.1993 FR 9311516
(71) Demandeur: SARP INDUSTRIES, F-78520 Limay (FR)
(72) Inventeur: Vigneron, André, Cabinet Ballot Schmit, F-75116 Paris (FR); Codaccioni, Jean-Pierre, Cabinet Ballot Schmit, F-75116 Paris (FR)
(74) Mandataire: Schmit, Christian Norbert Marie

(57) **Abrégé**

L'invention concerne un procédé de réhabilitation de sols pollués et installation pour la mise en oeuvre de ce procédé, se caractérisant en ce que les sols pollués (3) préalablement excavés et traités, sont introduits dans une cellule de contactage (10, 11) dans la partie basse de laquelle l'injection du tiers corps, en direction des parois latérales de ladite cellule, forme une solution polluée recueillie par la suite dans la partie haute, tandis que les sols séparés en continu de la solution polluée, sont récupérés en partie basse de ladite cellule, avant d'être rincés (22, 23) et séchés (27).

## Description

La présente invention est relative au domaine de la réhabilitation des sols, et plus précisément au domaine de la réhabilitation des sols pollués, par l'intermédiaire d'un tiers corps.

Les sols pollués constituent un système hétérogène dans lequel le pollué et le polluant ont une nature chimique fondamentalement différente. En effet, le pollué est de nature essentiellement minérale, tandis que le polluant est de nature essentiellement organique.

Le tiers corps ayant une affinité sélective en faveur du polluant peut ainsi avantageusement être utilisé pour laver le pollué.

Dans le cas où le tiers corps est un solvant, on obtiendra une solution monophasique homogène dans laquelle le polluant est le soluté, l'ensemble pollué et solution formant alors un mélange biphasique décantable.

La plupart des procédés de l'état de la technique effectuent un lavage des sols pollués par percolation, selon lequel le tiers corps, pulvérisé au dessus d'une cuve contenant les sols pollués, s'infiltre au travers de ces derniers, avant d'être récupéré en fond de cuve sous la forme d'une solution polluée.

De tels procédés sont lents car ils réalisent un contactage de qualité très médiocre entre le tiers corps et les sols pollués. Dès lors, l'extraction se fait mal et le rendement de la dépollution est faible par rapport à la quantité de tiers corps introduite. En outre, l'infiltration du tiers corps au sein des sols pollués s'effectue selon un cheminement préférentiel laissant de coté certaines zones de la cuve de percolation.

Certains procédés effectuent par contre un lavage par mélange des sols pollués et du tiers corps dans une cuve de mélangeage.

Une agitation énergique favorise le contactage mais provoque une attrition des sols génératrice de fines particules qu'il faut traiter avec attention.

De plus, ces procédés sont discontinus et nécessitent une séparation des sols lavés et de la solution polluante obtenue après extraction du polluant. Cette séparation se réalise dans une étape ultérieure, par décantation.

Par ailleurs, les procédés de l'état de la technique nécessitent en général un matériel qui ne peut être mis en oeuvre sur les lieux de la pollution. Par exemple, les procédés mentionnés ci-dessus comportent notamment des cuves de percolation ou des cuves de décantation qui ont des dimensions telles qu'elles ne sont en général pas transportables.

Le but de l'invention est de réaliser un procédé et une installation de réhabilitation des sols pollués, par l'intermédiaire d'un tiers corps, qui remédie à moindres frais aux inconvénients précités en permettant notamment un contactage efficace, sans attrition, ne nécessitant pas de séparation ultérieure par décantation.

L'invention a pour objet un procédé de réhabilitation des sols pollués par l'intermédiaire d'un tiers corps, selon lequel les sols pollués, préalablement excavés et traités, sont introduits dans une cellule de contactage, dans la partie basse de laquelle l'injection du tiers corps, en direction des parois latérales de ladite cellule, forme une solution polluée recueillie par la suite dans la partie haute, tandis que les sols séparés en continu de la solution polluée, sont récupérés en partie basse de ladite cellule, avant d'être rincés et séchés.

L'invention a d'autre part pour objet, une installation pour la mise en oeuvre du procédé selon la revendication 1, qui comporte au moins une cellule de contactage comprenant en sa partie basse un orifice d'injection du tiers corps en direction des parois latérales de ladite cellule et une ouverture d'évacuation des sols et, dans sa partie haute, une goulotte de surverse.

L'invention sera mieux comprise au regard de la description qui va suivre d'un mode de réalisation non limitatif, rédigé en référence aux dessins et dans lesquels :
- la figure 1 est une vue en coupe d'un ensemble de deux contacteurs pour la mise en oeuvre du procédé selon l'invention ; et
- la figure 2 illustre schématiquement les différents moyens utilisés dans la mise en oeuvre de l'invention.

Les sols visés par la présente description sont relatifs à un ensemble solide de matières dispersées comprenant essentiellement des composés inorganiques.

Les polluants visés par la présente invention, sont généralement présents à raison de quelques pourcents dans les sols pollués. Ce sont des composés essentiellement organiques volatils (solvants halogénés, benzènes et dérivés, ...), mais plus particulièrement des composés organiques semi-volatils (hydrocarbures aromatiques polynucléaires, hydrocarbures pétroliers totaux, ...) ou lourds (pétrole brut, huiles, polychlorobiphényls, ...).

Le tiers corps utilisé dans le cadre de la présente invention a une affinité sélective pour le polluant. Il peut être formé d'eau, additionnée par exemple d'agents tensio-actifs ou de produits de complexation. Néanmoins, il est constitué de préférence par un solvant organique qui permet une réelle dissolution du polluant et se prête volontiers à une régénération au moyen d'opérations légères et fiables.

Les solvants avantageusement mis en oeuvre dans le procédé selon l'invention, sont des solvants organiques standards tel que des alcanes, des alcools, des cétones, ou autres solvants organiques liquides à température et à pression ambiante. Pourtant, d'autres solvants tels que certains gaz liquides à basse température peuvent être utilisés moyennant quelques adaptations courantes dans la technique considérée.

Le procédé selon l'invention comporte différentes étapes. Le sol est tout d'abord préparé, avant d'être mélangé avec le tiers corps, puis il est séparé de la solution polluée qui aura été formée. Une fois récupéré, il est rincé et séché, tandis que le tiers corps est régénéré.

La préparation des sols pollués consiste à excaver les sols pollués et à les traiter pour n'introduire dans la suite du procédé, que les particules de granulométrie souhaitée, en général inférieure à 5 mm, et avantageusement de l'ordre de 3 mm. Dans ce but, les gros débris, les racines, ou les grosses pierres sont tout d'abord éliminés par criblage. Les mottes sont broyées, et le sol pollué est tamisé.

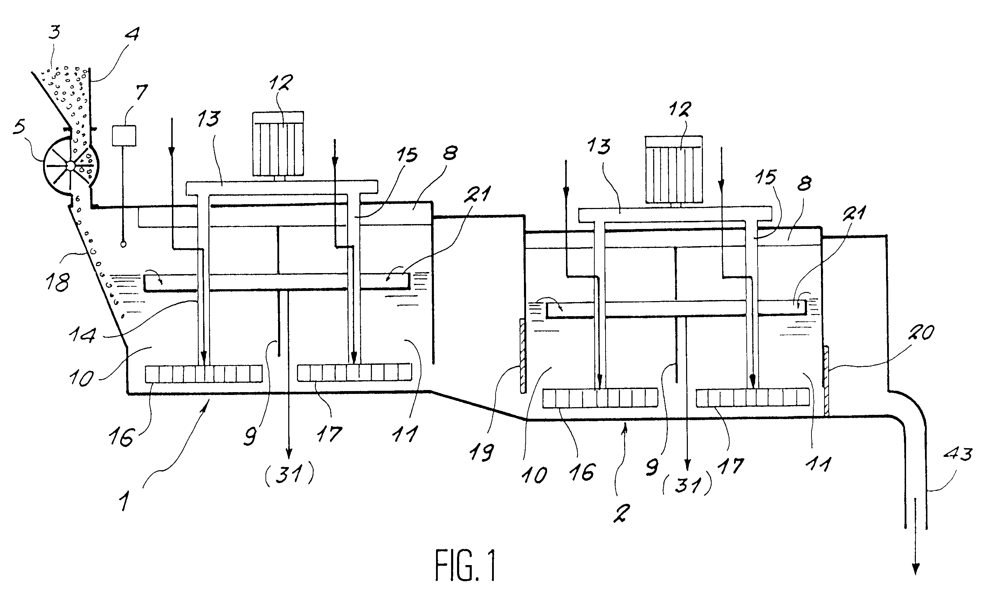

Le mélange a lieu dans des contacteurs référencés 1 et 2 en figure 1.

Les sols pollués 3 sont introduits dans une trémie 4 reliée par l'intermédiaire d'une écluse 5 au contacteur 1.

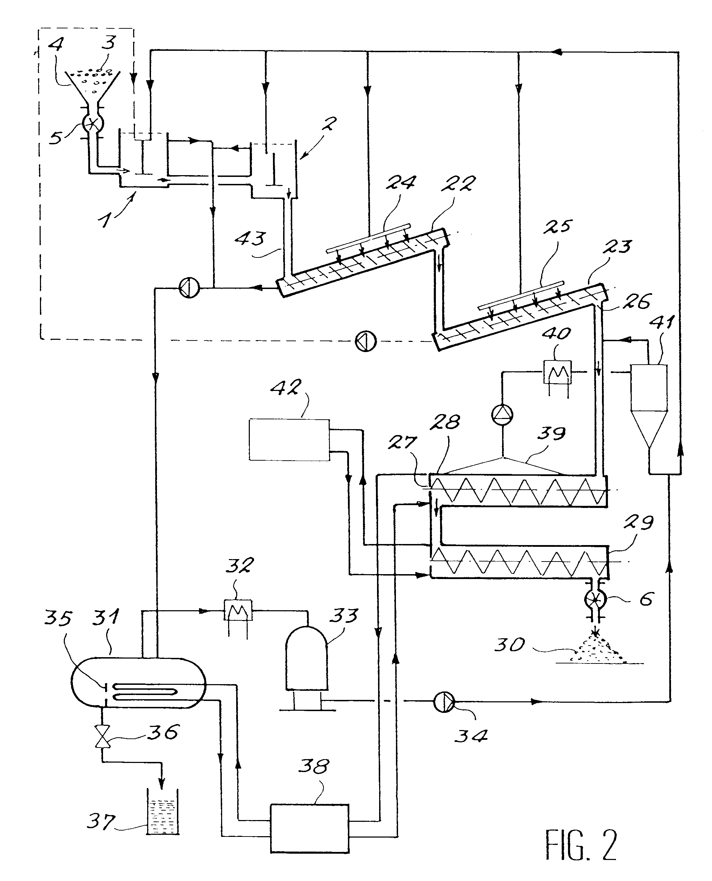

L'écluse 5 permet d'introduire les sols pollués 3 dans le contacteur 1 sans introduire d'air, tandis qu'une seconde écluse, référencée 6 en figure 2, permet d'évacuer les sols traités sans sortie parallèle de gaz.

L'installation étant hermétiquement close, le procédé de l'invention pourra donc se réaliser sous vide, ou dans une atmosphère confinée, par exemple sous azote. Dans ce dernier cas, des détecteurs d'oxygène et/ou d'azote 7, avantageusement disposés à l'entrée du contacteur 1, contrôlent l'absence d'oxygène ou la pression en azote.

Les contacteurs 1 et 2 sont fabriqués selon le même modèle et sont légèrement décalés l'un par rapport à l'autre dans le sens de la hauteur, vers le bas, le second contacteur 2 étant plus bas que le premier contacteur 1. L'exemple de la présente description comporte deux contacteurs, agencés en série, l'un après l'autre. Toutefois on peut multiplier le nombre de contacteurs. Dans ce cas, chaque contacteur n + 1 est disposé de manière à être légèrement plus bas que le contacteur n qui le précède. Chaque contacteur est formé d'un bac refermé par un couvercle 8 et comporte une cloison 9 définissant deux cellules de contactage 10 et 11. Un moteur 12 disposé au dessus et à l'extérieur du couvercle 8 entraîne en rotation, par l'intermédiaire d'un élément horizontal 13, deux arbres verticaux creux 14, 15 centrés le long de l'axe de chaque cellule de contactage. Ces arbres verticaux supportent en leur partie basse, au niveau de la partie basse du contacteur, chacun un disque horizontal 16, 17 muni de pâles figurées sur la figure 1 par des traits verticaux. La partie basse d'un contacteur ou de ladite cellule de contactage correspond sensiblement au quart inférieur dudit contacteur ou de ladite cellule de contactage.

Dans un exemple de réalisation, un contacteur est composé de deux cellules de 760 mm de hauteur séparées par une cloison. Chaque cellule présente une section transversale rectangulaire de 960 mm x 930 mm. Un disque de 700 mm de diamètre est disposé sensiblement au centre du rectangle, à 70 mm du fond de la cellule.

Le tiers corps est introduit dans la partie haute de chaque arbre creux 14 ou 15, et s'écoule à l'intérieur de ceux-ci, avant d'être injecté dans la partie basse de chaque cellule de contactage, à la périphérie des disques 16 et 17 en des points multiples, une cinquantaine environ, selon un plan approximativement orthogonal à l'axe des cellules de contactage. Le diamètre des disques 16 et 17 est avantageusement supérieur à la moitié du diamètre des cellules de contactage. Le nombre de points d'injection est ainsi plus grand et la dispersion du tiers facilitée notamment dans l'espace réduit situé entre les pales des disques et les parois latérales des cellules de contactage.

Le mélange se décompose en deux étapes : le contactage et l'extraction. Ces deux étapes ont lieu au niveau de la partie basse des cellules de contactage.

Les sols pollués sont introduits le long d'un plan incliné 18, dans la partie basse de la première cellule de contactage 10, préférentiellement au dessus du disque 16. Or, à ce niveau, la dispersion du tiers corps est extrêmement importante puisque d'une part, le tiers corps est injecté sensiblement en direction des parois latérales des cellules, sensiblement radialement auxdites parois, et en de multiples points et, d'autre part le tiers corps est immédiatement dispersé par les pâles des disques 16, 17 en rotation. Le contactage étant favorisé par la dispersion, ce procédé se révèle excellent.

L'extraction, c'est-à-dire la mise en solution du polluant se réalisera alors avec une grande facilité puisqu'elle est proportionnelle à la surface de contact entre les polluants et le tiers corps. Par ailleurs, l'attrition sera limitée voire inexistante dans ce type de mélange par dispersion, ce qui permettra de limiter au maximum la production de fines.

La séparation entre la solution polluée et le sol est réalisée dans les contacteurs eux-même, en continu. En effet, la dispersion n'est pas génératrice de courants de fluide de forte puissance qui pourraient entraîner des particules de sol vers la partie haute des cellules de contactage, mais d'une turbulence cantonnée principalement dans la partie basse de ces cellules. En conséquence, une décantation dans une étape séparée n'est pas nécessaire. Les sols pollués vont prendre, du fait de la rotation du disque, un mouvement circulaire et transiter d'une cellule à l'autre d'un même contacteur par une ouverture pratiquée au bas de la cloison 9. Le passage d'un contacteur 1 à l'autre 2 est réglé par un registre 19 obturant plus ou moins l'ouverture d'entrée du second contacteur. C'est le décalage vers le bas du second contacteur qui permet ce passage, les sols pollués étant amenés, de par leur poids, à descendre par gravité vers le contacteur le plus bas. En outre, le passage d'un contacteur à l'autre et l'entrée en continu de sol crée un courant ou flux de sol qui favorise le transit entre les cellules d'un même contacteur. A la sortie de ce contacteur, un second registre 20 permet d'évacuer le sol par gravité dans la canalisation 43 pour le rinçage. Le contactage, la séparation s'effectuent avec un passage du sol pollué le long de plusieurs contacteurs 1, 2 agencés l'un après l'autre, en serie.

Parallèlement, la solution polluée migre tout simplement vers la partie haute des contacteurs, repoussée par l'arrivée de solvant propre. Une goulotte de surverse 21 permet de recueillir la solution polluée pour la diriger à l'entrée de la phase de régénération.

Le système est particulièrement intéressant car il est souple et permet notamment de régler le temps de séjour des sols dans les contacteurs, grâce aux registres 19, 20.

Le rinçage consiste à remplacer la solution polluée présente dans les sols évacués par la canalisation 43, par du tiers corps propre.

Cette étape du procédé est effectuée par deux vis inclinées 22, 23 entraînant en continu les sols sous des jets 24, 25 de tiers corps. Le tiers corps ayant servi au rinçage dans les vis inclinées est récupéré au bas de desdites vis et peut avantageusement être réintroduit au niveau des contacteurs grâce à une pompe, comme cela est représenté dans le cas de la vis 23 par une ligne de traits tirés.

Un essorage est alors effectué à l'extrémité supérieure de la vis inclinée 23, par un piston repoussé par un contrepoids ou un ressort, vers les échantillons de sol débouchant au niveau de ladite extrémité. Les échantillons de sol sont compressés par le piston qui recule peu à peu. Le tiers corps en excès est évacué, jusqu'au moment où les sols essorés tombent par gravité dans l'orifice 26 conduisant à la phase de séchage.

On remarquera que les échantillons de sol parcourant les vis inclinées 22 et 23 forment avantageusement dans lesdites vis, des bouchons assurant une certaine étanchéité au système.

Le séchage permet d'éliminer le tiers corps qui n'a pas été essoré. Les sols sont introduits dans une première vis 27 chauffée par un fluide caloporteur circulant la double enveloppe 28 desdites vis et issu d'un réservoir 38 thermorégulateur. Des palettes brassent les sols à l'intérieur de la vis 27 et leur permet de se déplacer vers l'orifice d'entrée d'une seconde vis 29 bâtie selon des caractéristiques semblables à la vis 27 mais effectuant un refroidissement des sols grâce à la circulation d'eau froide en provenance d'un réservoir 42.

A l'extrémité de la vis 29 un orifice débouchant sur l'écluse 5 permet d'évacuer les sols secs 30, sans évacuer d'azote.

Lorsque le tiers corps est un solvant, celui-ci est régénéré afin d'être recyclé dans l'installation.

La régénération s'effectue par simple distillation. La solution polluée provenant soit des contacteurs 1 et 2, soit des vis de rinçage 22 et 23, est amenée dans un vaporisateur 31 dans lequel circule le fluide caloporteur du sécheur. La température dans ce vaporisateur est suffisante pour permettre l'évaporation du solvant alors dirigé vers un condenseur 32, puis un réservoir de stockage 33.

Une pompe 34 alimentera alors les contacteurs 1, 2 et les jets 24, 25 en solvant propre.

L'évacuation du polluant ne nécessite pas l'arrêt du vaporisateur puisque celui-ci est séparé en deux parties par une cloison 35. Le solvant pollué entre dans la première partie dans laquelle il est chauffé, puis il transite par débordement continuel dans la seconde partie non chauffée, où s'achève l'évaporation du solvant. Une vanne thermostatique 36, sensible à la baisse de température due à l'accumulation du polluant évacue ce dernier au fur et à mesure dans des fûts 37.

Les vapeurs dégagées au niveau du sécheur 27 sont récupérées au niveau d'une hotte aspirante, puis condensées grâce à un condenseur 40. Un cyclone 41 réintégrera l'azote au niveau de la canalisation reliant la vis de rinçage 23 au sécheur 27, et dirigera le solvant propre vers les contacteurs 1, 2 ou les jets 24, 25.

Les résultats obtenus sont remarquables puisqu'un sol pollué par 10 % en masse de gasoil et mélangé selon le procédé de l'invention à 60 % d'un solvant organique spécifique adapté au sol et au polluant, est dépollué à plus de 90 %, suite à l'extraction réalisée dans les contacteurs.

En outre, les différents éléments de l'installation ont des dimensions telles qu'ils peuvent être agencés de manière à pouvoir être mis en oeuvre sur les lieux de la pollution, en vue d'un traitement des sols in situ. La régénération des fluides utilitaires constitue l'un des facteurs permettant cette mobilité. Dans le cas d'une installation mobile, l'énergie pourra bien entendu être fournie par un groupe électrogène. La capacité de traitement d'une telle installation mobile est d'environ 4 tonnes par heure.

## Revendications

1. Procédé de réhabilitation des sols pollués (3) par l'intermédiaire d'un tiers corps, caractérisé en ce que les sols pollués, préalablement excavés et traités, sont introduits dans une cellule de contactage (10, 11) d'un contacteur(l, 2) dans la partie basse de laquelle l'injection du tiers corps, en direction des parois latérales de ladite cellule, forme une solution polluée recueillie par la suite dans la partie haute, tandis que les sols séparés en continu de la solution polluée sont en partie récupérés en partie basse de ladite cellule, avant d'être rincés (22, 23) et séchés (27).

2. Procédé selon la revendication 1, caractérisé en ce que le tiers corps est injecté selon un plan approximativement orthogonal à l'axe des cellules de contactage.

3. Procédé selon l'une des revendications 1 ou 2, caractérisé en ce que le tiers corps est injecté en des points multiples.

4. Procédé selon l'une des revendications 1, 2 ou 3, caractérisé en ce que le tiers corps est un solvant organique, le procédé étant alors réalisé dans une atmosphère confinée.

5. Procédé selon l'une des revendications précédentes, caractérisé en ce que la solution polluée est recueillie par surverse (21).

6. Procédé selon l'une des revendications précédentes, caractérisé en ce que le contactage s'effectue avec un passage du sol pollué (3) le long de plusieurs contacteurs (1, 2) agencés l'un après l'autre,en série.

7. Installation pour la mise en oeuvre du procédé selon la revendication 1, caractérisée en ce qu'elle comporte au moins une cellule de contactage (10,11) comprenant, en sa partie basse, un orifice d'injection du tiers corps en direction des parois latérales de ladite cellule, et une ouverture d'évacuation des sols et, dans sa partie haute, une goulotte de surverse (21).

8. Installation selon la revendication 7, caractérisée en ce que la cellule de contactage comprend un arbre (14, 15) relié à un moteur et portant un disque horizontal (16, 17) muni d'orifices d'injection du solvant à sa périphérie.

9. Installation selon l'une des revendications 7 ou 8, caractérisée en ce qu'elle comporte au moins deux écluses (5, 6), l'une à l'entrée des sols pollués dans les contacteurs et l'autre à la sortie des sols propres (30) du sécheur (27) ou du refroidisseur (29).

10. Installation selon l'une des revendications 7, 8 ou 9, caractérisé en ce qu'elle comporte plusieurs contacteurs (1, 2) agencés l'un après l'autre, décalés vers le bas.
